# EUROPÄISCHE PATENTSCHRIFT

(11) **EP 1 127 849 B1**
(45) Veröffentlichungstag und Bekanntmachung des Hinweises auf die Patenterteilung: **16.04.2003**
(21) Anmeldenummer: 99121288.7
(22) Anmeldetag: 26.10.1999
(51) Int. Cl.: C02F 3/12, C02F 1/44

(54) **Verfahren zur Reinigung und/oder Aufbereitung kommunaler und/oder industrieller Abwässer**
Process for purifying municipal or industrial waste waters
Procédé pour la purification des eaux usées industrielles ou domestiques

(43) Veröffentlichungstag der Anmeldung: 29.08.2001
(60) Teilanmeldung: 02023874.7
(73) Patentinhaber: Rochem Ultrafiltrations Systeme Gesellschaft für Abwasserreinigung mbH, 20355 Hamburg (DE)
(72) Erfinder: Heine, Wilhelm, 21077 Hamburg (DE); Loettel, Wolfgang, Prof. Dr.-Ing., 06366 Köthen (DE); Günther, Ralph, Dr.-Ing., 21244 Buchholtz (DE)
(74) Vertreter: Niedmers, Ole, Dipl.-Phys.

(56) Entgegenhaltungen:
- EP-A- 0 634 368
- WO-A-99/07643
- WO-A-99/43622
- DE-A- 19 753 326
- DE-C- 19 527 295

## Beschreibung

### Beschreibung

Die Erfindung betrifft ein Verfahren zur Reinigung und/oder Aufbereitung kommunaler und/oder industrieller Abwässer, insbesondere zum Einsatz in marinen Einrichtungen.

Abseits des flächendeckenden Einsatzes kommunaler Kläranlagen gibt es Abwasserströme kommunaler und/oder industrieller Art, die dezentral aufbereitet bzw. gereinigt werden müssen, bevor sie der Umwelt zugeführt werden können. Man unterscheidet grob drei typische Arten dezentraler Anlagen, mit denen Abwässer gereinigt bzw. aufbereitet werden können, und zwar solche, die beispielsweise in Gemeinden anzutreffen sind, die keinen Anschluß an kommunale Aufbereitungs- und Reinigungsanlagen haben (Fall 1). Die industrielle Abwasseraufbereitung für Problemstoffe, die aufgrund eines ungünstigen Verhältnisses Konzentrationen von CSB zu BSB₅ haben (Fall 2), die in herkömmlichen Reinigungs- bzw. Aufbereitungsanlagen nicht behandelt werden können.

Ein besonderes Problem stellt die Abwasseraufbereitung bzw. Reinigung auf marinen Einrichtungen, wie Schiffen (Fall 3) dar.

Insbesondere in den Fällen 1 und 3 müssen dabei Abwässer stark schwankender Zusammensetzung behandelt werden, was sowohl den Volumenstrom als auch die Zusammensetzung der Abwässer angeht. Bei Fall 3 muß zusätzlich den Gegebenheiten mariner Einrichtungen, beispielsweise Schiffen, Rechnung getragen werden.

Insbesondere beim Einsatz in marinen Einrichtungen, beispielsweise an Bord von Schiffen, sind in der Zwischenzeit aufgrund internationaler Vereinigungen wie der IMO (International Maritime Organisation) sehr rigide Vorschriften erlassen worden bezüglich der Einleitung von Schadstoffen von marinen Einrichtungen aus ins Meer. Die dort festgelegten Grenzwerte liegen teilweise erheblich niedriger als die zulässigen Grenzwerte, die bei Strömen gereinigten Abwassers aus ortsfesten Aufbereitungs- und Reinigungsanlagen an Land üblich sind. Da die Weltmeere zunehmend auch in sensiblen Gewässern, beispielsweise der Arktis und der Antarktis, sowohl von Forschungsschiffen als auch von Fischereischiffen und neuerdings auch von Passagierschiffen (Kreuzfahrtschiffen) befahren werden, sind zwischenzeitlich sehr rigide Vorschriften erlassen worden, um diesen Umständen Rechnung zu tragen.

Bisher wurde das auf marinen Einrichtungen anfallende Abwasser in Tanks gesammelt, d.h. zumindest beim Hafenaufenthalt und innerhalb der nationalen Gewässerzonen, und wurde dann nach ggf. unvollständiger oder nicht zuverlässiger Reinigung auf hoher See direkt ins Meer abgeleitet. Es fand faktisch keine Reinigung des Abwassers statt, vielmehr wurden sämtliche angefallenen Schadstoffe mit dem Trägerwasser in das Meer geleitet.

Dieses ist aus den vorgenannten Gründen äußerst nachteilig und wird in Zukunft auch nicht mehr zulässig sein. Andererseits stellt aber eine Abwasserreinigung bzw. Aufbereitung an Bord mariner Einrichtungen aufgrund der sehr begrenzten Platzverhältnisse hohe Anforderungen an einen sehr kompakten und kleinen Aufbau von Vorrichtungen bzw. Anlagen und es tritt ein weiteres erhebliches Problem auf, daß nämlich aufgrund der Krängungsbewegung und/oder Rollbewegung von Schiffen die Reinigung und Aufbereitung von Abwässern dennoch immer gewährleistet sein muß, d.h. ein Verfahren zur Reinigung und/oder Aufbereitung der Abwässer muß auch unter diesen Randbedingungen fortwährend uneingeschränkt funktionsfähig sein. Ein weiteres erschwerendes Moment der Möglichkeiten der Reinigung und/oder Aufbereitung von Abwässern, wie sie bei marinen Einrichtungen anfallen, ist darin begründet, daß die Abwasserströme beispielsweise an Bord von Schiffen in der Regel nicht getrennt werden, d.h. im Ergebnis eine Mischung kommunaler und technischer Abwässer vorliegt. Insbesondere durch die Einbringung technischer Lösungen (Fette, Reinigungsmittel, Tenside, Desinfektionsmittel usw.) steigt das Verhältnis von CSB/BSB₅ über das im normalen kommunalen Abwasser übliche Niveau an. Das Ansteigen kann zudem auch stoßartig erfolgen. Durch die niedrige Konzentration der Mikroorganismen, wie sie bei bisherigen konventionellen Reaktionssystemen mit maximalen Biomassekonzentrationen von 5g/1 anzutreffen sind; kann diesen Schwankungen nicht Rechnung getragen werden und der Grad des biologischen Abbaus verringert sich stark.

Es ist deshalb Aufgabe der vorliegenden Erfindung, ein Verfahren der Eingangs genannten Art zu schaffen, zu schaffen, mit dem Abwasserströme gereinigt und/oder aufbereitet werden können, die eine stark wechselnde hydraulische Belastung aufweisen, wie sie beispielsweise in marinen Einrichtungen, beispielsweise Schiffen, auftreten, wobei eine quasi kontinuierliche Reinigung und/oder und/oder Aufbereitung in einem quasi geschlossenen System erreicht werden kann und wobei das Verfahren derart betreibbar ist daß es einen sehr geringen Betreuungs- und Wartungsaufwand aufweist und wobei das Verfahren einfach und kostengünstig durchführbar bzw. einfach und kostengünstig bereitstellbar ist.

Gelöst wird die Aufgabe gemäß oder erfindung dadurch, daß das zu reinigende bzw. aufzubereitende Abwasser auf ein biologisches Reaktionssystem, in dem Biomasse hoher Konzentration suspendiert ist, gegeben wird, wobei das behandelte Abwasser nach der Behandlung im Reaktionssystem auf eine. Membrantrenneinrichtung gegeben wird, in der es in ein Permeat und ein Retentat getrennt wird, und wobei das Permeat entweder als Brauch- oder Reinwasser abgeführt oder wenigstens teilweise in das Reaktionssystem zurückgeführt wird und daß das nach dem Prinzip der Hochzelldichtefermentations betriebene Reaktions-system entweder mit einer Biomassenkonzentration von 1 bis 2 g/l als Startkultür geladen wird, die auf die gewunschte hohe Konzentration von 30g/l gesteigert wird oder mit einer hohen Konzentration von Biomasse von 30g/l geladen wird.

Der Vorteil des erfindungsgemäßen Verfahrens liegt im wesentlichen darin, daß aufgrund der erfindungsgemäß möglichen hohen Biomassekonzentration das zu reinigende bzw. aufzubereitende Abwasser bereits am Ausgang des Reaktionssystems Ablaufkonzentrationen erreicht, die mit bisherigen konventionellen Systemen nicht erreichbar waren. Ein weiterer wesentlicher Vorteil der erfindungsgemäßen Lösung besteht darin, daß durch die nachgeschaltete Membrantrenneinrichtung in einem einstufigen Vorgang die Abtrennung des gereinigten Abwassers erfolgen kann und das gereinigte Abwasser bakterien- und virenfrei ist, wohingegen konventionelle Systeme nicht in der Lage sind, Viren oder Bakterien abzutrennen. Zudem ist von Vorteil, daß das Verfahren quasi kontinuierlich in einem quasi geschlossenen Kreislauf vonstatten gehen kann.

Gemäß einer vorteilhaften Ausgestaltung des Verfahrens wird das Retentat wenigstens teilweise in das Reaktionssystem zurückgeführt, beispielsweise dann, wenn in ausreichendem Maße Abwasser zur Reinigung und/oder Aufbereitung zugeführt wird.

Die DE-A- 197 53 326 beschreibt einen herkömmlichen Bioreaktor, der mit einer Biomassenkonzentration von 25g/l betrieben wird.

Obwohl grundsätzlich eine breite Möglichkeit der Heranziehung unterschiedlicher biologischer Reaktionssysteme, die etwas unscharf auch Bioreaktoren genannt werden, möglich ist, ist es vorteilhaft, das Reaktionssystem gemäß der Erfindung nach dem Prinzip der Hochzelldichtefermentation zu betreiben, d.h. im Gegensatz zu konventionellen Systemen mit maximalen Biomassekonzentrationen von 5g/l das erfindungsgemäße System bei 30g/l zu betreiben.

Vorteilhafterweise wird das zu reinigende bzw. aufzubereitende Abwasser vor Einführung in das Reaktionssystem vorfiltriert, d.h. es findet vorteilhafterweise eine in Teilbereichen vorgeschaltete mechanische Vorklärung des Abwassers statt, bevor es in das Reaktionssystem eingeführt wird. Dadurch wird die biologische Behandelbarkeit des Abwassers, befreit von teilchenförmigen Substraten, im Reaktionssystem durch die Mikroorganismen einfacher abbaubar sein.

Um den für den biologischen Abbau erforderlichen Sauerstoff bereitzustellen, wird Luft oder Sauerstoff in das Reaktionssystem eingetragen mit den Ziel, auch eine ideale Durchmischung des Abwassers im Reaktionssystem ohne zusätzliche Rührer oder sonstige mechanische Einrichtungen zu gewährleisten.

Da das im Reaktionssystem behandelte Abwasser, was auf die Membrantrenneinrichtung geführt werden soll, oft aufgrund der Temperatur des Zulaufs des Abwassers in das Reaktionssystem hinein eine unterschiedliche Temperatur aufweist, die Trennwirkung der Membrantrenneinrichtung und/oder die biologische Vorreinigung in der Reaktionseinrichtung jedoch bei bestimmten Temperaturen des darüber geleiteten bzw. eingebeteten Abwassers eine maximale Trennleistung zeigt, ist es vorteilhaft, das im Reaktionssystem behandelte Abwasser wenigstens vor Eintritt in die Membrantrenneinrichtung zu temperieren.

Um sicherzustellen, daß die Membrantrenneinrichtung für den Trennvorgang des Abwassers in ein Permeat und ein Retentat fortwährend einen gleichbleibenden, vorbestimmten Abwasserdruck der Eingangsseite der Membrantrenneinrichtung aufweist (Feeddruck), wird das im Reaktionssystem behandelte Abwasser vor Eintritt in die Membrantrenneinrichtung druckerhöht.

Die bzw. der in das Reaktionssystem eingeführte Luft bzw. Sauerstoff weist vorteilhafterweise einen Druck von 1 bis 1,2 bar auf, d.h. er kann atmosphärisch oder mit einem Überdruck von 0,2 bar über Atmosphärendruck betrieben werden. Auch andere Drücke des Reaktionssystems eingegebenen Sauerstoff können grundsätzlich gewählt werden.

Je nach Anfall der Menge des Abwassers kann vorteilhafterweise die Rückführung des Permeats dann erfolgen, wenn der Pegel des Abwassers (ursprüngliches Abwasser und Retentat) im Reaktionssystem eine festlegbare untere Grenze erreicht hat, und nach außen als Brauchwasser abgeführt wird, wenn der Pegel des Abwassers (ursprüngliches Abwasser, Retentat und Permeat) im Reaktionssystem eine obere Grenze erreicht hat. Diese Erfassung des oberen und unteren Pegels kann verfahrenstechnisch in vollem Umfang automatisiert betrieben werden, so daß ein manueller Eingriff bzw. eine manuelle Umschaltung dafür nicht erforderlich ist, die sich ggf. sogar als schädlich, weil unpräzise, für die quasi kontinuierliche Verfahrensführung herausstellen kann.

Um eine Spülung der Membrantrenneinrichtung zu vermeiden, die normalerweise bei solchen Verfahrensintervallen notwendig wäre, in denen kein in der Reaktionseinrichtung anfallendes vorgereinigtes bzw. vorbehandeltes Abwasser auf die Membrantrenneinrichtung gegeben wird, die Membrantrenneinrichtung somit quasi kontinuierlich zu betreiben, ist es vorteilhaft, wenigstens einen Teil des Retentats und/oder Permeats unter Druckerhöhung auf die Membrantrenneinrichtung nach Art eines Kreislaufs zurückzuführen. Damit ist auch im Langzeitbetrieb des Verfahrens eine Reinigung, die ggf. chemisch erfolgen müßte, der Membrantrenneinrichtung entbehrlich.

Eine Vorrichtung zur Reinigung und/oder Aufbereitung kommunaler und/oder industrieller Abwässer, insbesondere zum Einsatz in marinen Einrichtungen, umfaßt bisher im wesentlichen eine biologisch betriebene Reaktionseinrichtung zur Aufnahme des zu reinigenden und/oder aufzubereitenden Abwassers.

Die Vorrichtung ist auf einfache Weise auch dann quasi kontinuierlich betreibbar , wenn momentan kein Abwasser in die Vorrichtung bzw. in die Reaktionsvorrichtung geleitet wird. Zudem stellt die Membrantrenneinrichtung eine viren- und/oder bakteriendichte Trennung des Kreislaufsystems der Vorrichtung zu dem die Vorrichtung verlassenden Permeat, daß das gereinigte bzw. aufbereitete Abwasser darstellt, dar, so daß keine Bakterien und/oder Viren zerstörende Nachbehandlung des Permeats erforderlich ist.

Die Reaktionseinrichtung ist vorteilhafterweise als idealer Rührbehälter ohne Rührer betreibbar, denn mittels dem vorteilhaften Vorsehen einer Pumpe zum Eintrag von Luft/Sauerstoff in die Reaktionseinrichtung erfolgt eine ideale Durchmischung des Inhalts der Reaktionseinrichtung.

Vorzugsweise ist eine Filtereinrichtung vorgesehen, über die das zu reinigende bzw. aufzubereitende Abwasser der Reaktionseinrichtung zugeführt wird. Die Art der Vorfiltration hängt von den Gegebenheiten beim Einsatz der Vorrichtung insgesamt ab. Die Filtereinrichtung ist vorzugsweise in Form einer mechanischen Filtereinrichtung aufgebaut und weist eine Maschenweite im Bereich von 60 bis 400 µm auf. Die Filtereinrichtung kann als sogenannter rückspülbarer Filter ausgebildet sein.

In der Verbindungsleitung zwischen der Reaktionseinrichtung und dem Eingang der Membrantrenneinrichtung ist vorteilhafterweise ein Wärmetauscher vorgesehen, um sicherzustellen, daß das der Membrantrenneinrichtung zugeführte Abwasser auf der optimalen Temperatur gehalten wird, die für den optimalen Betrieb der Membrantrenneinrichtung und/oder der Reaktionseinrichtung bestimmend ist.

Der Wärmetauscher ist vorteilhafterweise wahlweise mit einem temperaturerhöhenden bzw. temperaturerniedrigenden Temperierungsmittel beaufschlagbar, beispielsweise einem über einen Durchlauferhitzer erwärmten flüssigen Medium zur Wärmeerhöhung bzw. einem flüssigen Kühlmedium, um die Temperatur zu erniedrigen.

Um sicherzustellen, daß der für die Funktion der Membrantrenneinrichtung nötige Druck des vorgereinigten Abwassers fortwährend gewährleistet ist, ist es vorteilhaft, in einer Verbindungsleitung zwischen der Reaktionseinrichtung und dem Eingang der Membrantrenneinrichtung wenigstens eine Pumpe vorzusehen, die darüberhinaus dann auch für wenigstens einen Teilstrom des in der Membraneinrichtung erzeugten Retentats zur erneuten Einspeisung in den Eingang der Membrantrenneinrichtung zur Druckerhöhung des Teilstroms herangezogen werden kann.

Die Reaktionseinrichtung besteht vorzugsweise aus einer Mehrzahl von Einzelbehältern, die jeweils für sich als vollfunktionsfähige Reaktionseinrichtungen betreibbar sind. Dieser modulare Aufbau gestattet eine gute Überprüfbarkeit der Reaktionseinrichtungen und eine gute Möglichkeit der Wartung und des Austausches einzelner Behälter im Falle einer Funktionsunfähigkeit.

Die Einzelbehälter sind vorzugsweise parallelgeschaltet, sie werden jedoch als Gesamtreaktionseinrichtung betrieben.

Eine vorrichtung zur Ausführung des Verfahrens wird nun unter Bezugnahme auf die nachfolgende einzige schematische Zeichnung anhand eines Ausführungsbeispiels im Einzelnen beschrieben. Diese zeigt:
In Form eines Blockschaltbildes eine Vorrichtung zur Reinigung und/oder Aufbereitung kommunaler und/oder industrieller Abwässer, mit der auch ein Verfahren gemäß der Erfindung betrieben werden kann.

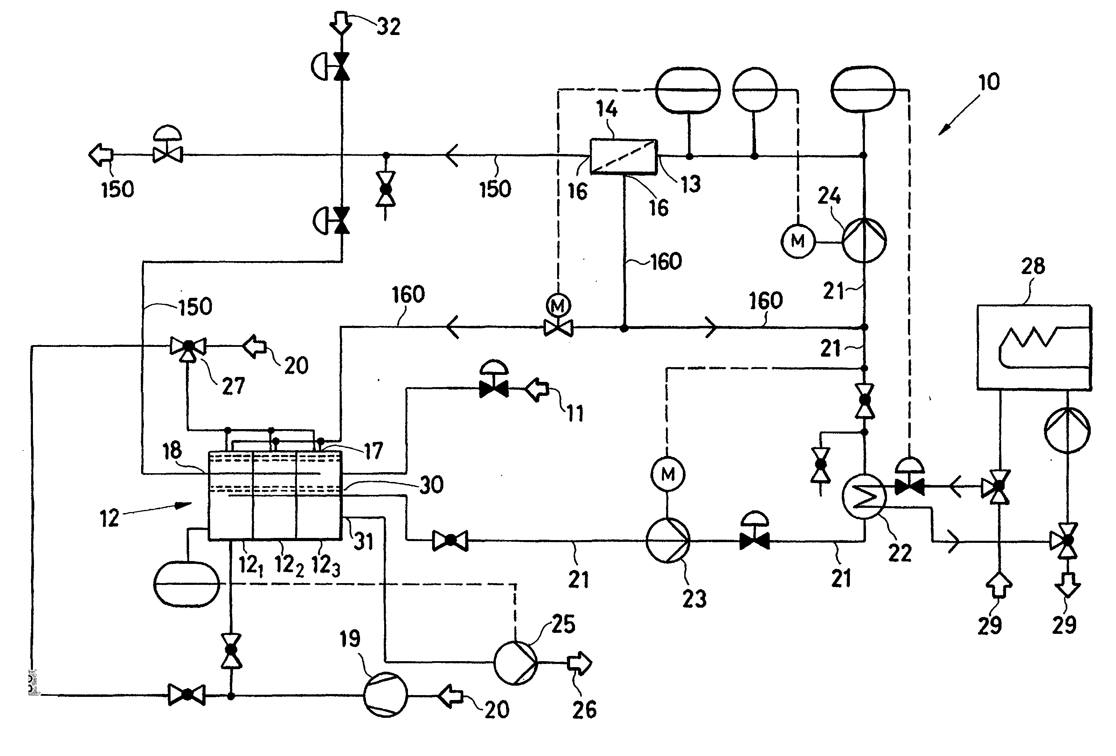

Es wird zunächst Bezug genommen auf die einzige Figur, die in Form eines Blockschaltbildes eine Vorrichtung 10 zeigt, mit der eine Reinigung und/oder Aufbereitung kommunaler und/oder industrieller Abwässer 11 möglich ist und die nach dem hier beschriebenen Verfahren betrieben werden kann. Die Vorrichtung 10 weist eine Reaktionsvorrichtung 12 auf, die aus einer Mehrzahl von Behältern 12₁, 12₂, 12₃ besteht. Die Behälter 12₁, 12₂ und 12₃ bilden in ihrer Gesamtheit die Reaktionsvorrichtung 12 und sind funktionsmäßig parallelgeschaltet. Es sei darauf hingewiesen, daß hier die in der Figur beispielhaft dargestellte Zahl von 3 Behältern nicht bestimmend für die Größe der Reaktionseinrichtung 12 ist. Vielmehr kann die Anzahl der Behälter je nach Aufgabe der mit der Vorrichtung 10 zu bewerkstelligenden Reinigungs- bzw. Aufbereitungsleistung variieren.

Die funktionsfähig miteinander verbundenen Einzelbehälter 12₁, 12₂ und 12₃ sind über eine Verbindungsleitung 21 mit dem Eingang 13 einer Membrantrenneinrichtung 14 verbunden. In diese Verbindungsleitung 21 sind zwei Pumpen 23, 24 in Reihe geschaltet, wobei zwischen den beiden Pumpen 23, 24 in die Verbindungsleitung zusätzlich noch ein Wärmetauscher 22 geschaltet ist. Alternativ oder zusätzlich kann ein Wärmetauscher 22 auch in die Verbindungsleitung zwischen der Pumpe 24 und der Membrantrenneinrichtung 14 geschaltet werden. Der Retentatausgang 16 der Membrantrenneinrichtung 14 ist einerseits mit dem Eingang der Pumpe 24 verbunden und andererseits mit dem Eingang 17 der Reaktionseinrichtung 12. Das am Retentatausgang 16 austretende Retentat kann somit in zwei Teilströme aufgeteilt, d.h. einerseits in die Reaktionseinrichtung 12 zurückgeführt werden und andererseits wieder auf die Saugseite der Pumpe 24. Der Permeatausgang 15 stellt das gereinigte und/oder aufbereitete Abwasser als Permeat 150 bereit, das die Vorrichtung 10 entweder als Brauchwasser oder als an die Umwelt abzugebendes Abwasser verläßt, oder aber das Permeat 150 wird auf einen weiteren Eingang 18 der Reaktionseinrichtung 12 in die Reaktionseinrichtung 12 zurückgeführt.

Luft oder Sauerstoff 20 wird über eine Pumpe 19, die die Funktion eines Gebläses hat, in die Reaktionseinrichtung 12 geführt. Zusätzlich kann Luft oder Sauerstoff auch über geeignete Umschaltung eines Dreiwegeventils 27 entweder von oben, von unten oder aus beiden Richtungen in die Reaktionseinrichtung 12 eingeführt werden. Als Luft- oder Sauerstoffeintragorgan fungieren sogenannte Gas-Flüssigkeitsverdichter, die beispielsweise auch hydraulisch über das Druckinventar des Retentats 160 der Membrantrenneinrichtung 14 angetrieben werden können. Das Abwasser 11, das mittels der Vorrichtung 10 gereinigt und/oder aufbereitet werden soll, wird über eine hier nicht gesondert dargestellte Filtereinrichtung, die beispielsweise in Form eines rückspülbaren mechanischen Filters mit einer Maschenweite zwischen 60 und 400 µm ausgebildet sein kann, geführt. Der in die Verbindungsleitung 21 eingeschaltete, schon erwähnte Wärmetauscher 22 wird entweder über eine ein wärmeabgebendes Medium erzeugende Einrichtung, beispielsweise in Form eines Durchlauferhitzers 28, geführt oder mit einer hier nicht dargestellten Einrichtung verbunden, die ein Kühlmedium erzeugt. Je nach der Temperatur des aus der Reaktionseinrichtung über die Pumpe 23 über den Wärmetauscher 22 geförderten vorgereinigten bzw. voraufbereiteten Abwassers wird das zur Membrantrenneinrichtung 14 an deren Eingang 13 geförderte Abwasser derart temperiert, daß eine optimale, konstante Temperatur gesichert wird. Die Temperatursteuerung kann automatisch durch Temperaturerfassung in der Verbindungsleitung 21 geregelt werden. Ebenso kann anstelle des Durchlauferhitzers 28 an Bord mariner Einrichtungen vorhandenes flüssiges und/oder gasförmiges Medium als Primärmedium im Wärmetauscher verwendet werden.

Die Reaktionseinrichtung 12 ist über einen weiteren Ausgang 31, über den Biomasse 26 aus der Reaktionseinrichtung 12 entfernt werden kann, mit einer Pumpe 25 verbunden, mittels der die Biomasse 26 zu einer hier nicht gesondert dargestellten Deponieeinrichtung bzw. zu einer hier nicht im einzelnen dargestellten anderweitigen Verwertung zugeführt werden kann.

Die Membrantrenneinrichtung 14 arbeitet nach dem Ultrafiltrationsprinzip mit einem Molekulargewichts-Cut Off zwischen 50.000 und 200.000 g/mol. Dadurch ist eine vollständige Rückhaltung von Mikroorganismen, Bakterien, Viren und suspendierten Inhaltsstoffen gewährleistet, d.h. diese sind im aus der Membrantrenneinrichtung 14 austretenden Permeat 150 (Brauchwasser) nicht enthalten. Durch diese Membranbarriere kann die Biomassekonzentration in der Reaktionseinrichtung 12 auf einem deutlich höheren Niveau als bisher bekannte Anlagen angehoben betrieben werden. Um auch bei hohen Biomassenkonzentrationen einen stabilen Betrieb der Membrantrenneinrichtung 14 ohne chemische Reinigung zu gewährleisten, kann in regelmäßigen Abständen mit Druckluft 32 von der Permeatseite her zurückgespült werden.

Der Verfahrensablauf zur Reinigung und/oder Aufbereitung kommunaler und/oder industrieller Abwässer 11 erfolgt folgendermaßen. Zunächst wird die Reaktionseinrichtung 12 mit Biomasse hoher Konzentration, in Wasser suspendiert, geladen. Alternativ kann auch mit einer sogenannten Startkultur mit einer Biomassenkonzentration von 1 bis 2 g/l in der Reaktionseinrichtung 12 begonnen werden, die dann auf die gewünschte Konzentration gesteigert wird. Die Biomassekonzentration beträgt beispielsweise, unabhängig davon, welcher der vorbeschriebenen Wege gewählt wird, für den weiteren Verfahrensablauf 30 g/l. Nachfolgend wird das zu behandelnde Abwasser 11 nach entsprechender Vorreinigung über mechanische Filter in die Reaktionseinrichtung 12 gegeben. Über die Pumpe 19 und/oder das Dreiwegeventil 27 wird Luft oder Sauerstoff 20 in die Reaktionseinrichtung 12 gegeben. In der Reaktionseinrichtung 12 erfolgt aufgrund der biochemischen Reaktionen eine Reinigung des darin enthaltenen Abwassers, bis es Ablaufkonzentration erreicht. Dieses vorgereinigte bzw. vorbehandelte Abwasser verläßt die Reaktionseinrichtung 12 an deren Ausgang 30 und wird über eine Verbindungsleitung 21 auf die Pumpe 23 geleitet, die das vorgereinigte bzw. behandelte Abwasser über den Wärmetauscher 22 zur Pumpe 24 fördert. Im Wärmetauscher 22 wird das vorgereinigte bzw. vorbehandelte Abwasser auf eine geeignete Temperatur temperiert, die optimal für den Trennvorgang in der Membrantrenneinrichtung 14 ist, auf deren Eingang 13 die Pumpe 24 das optimal temperierte vorgereinigte bzw. vorbehandelte Abwasser fördert. Die Pumpe 23 stellt den nötigen Betriebsdruck für die Funktion der Membrantrenneinrichtung 14 her. Die Pumpe 24 dient im wesentlichen der Geschwindigkeitserhöhung bzw. der Beschleunigung des auf die Membrantrenneinrichtung 14 geleiteten vorgereinigten bzw. vorbehandelten Abwassers.

In der Membrantrenneinrichtung 14 wird das vorbehandelte bzw. vorgereinigte und temperierte Abwasser in ein Permeat 150 und ein Retentat 160 auf an sich bekannte Weise getrennt. Das Retentat 160 verläßt die Membrantrenneinrichtung 14 und wird wenigstens teilweise in die Reaktionseinrichtung 12 zurückgeführt.

Bei bestimmten Betriebszuständen der Vorrichtung 10 bzw. des Verfahrens, bei denen kein Abwasser 11 zur Reaktionseinrichtung geführt wird, wird ein Teil des Retentats 160 auf die Eingangsseite der Pumpe 24 zurückgeführt, um die Membrantrenneinrichtung 14 auch bei diesem Betriebszustand quasi kontinuierlich zu betreiben und somit eine dauernde Funktionsfähigkeit der Membrantrenneinrichtung 14 zu gewährleisten.

Das Permeat 150 verläßt die Vorrichtung 10 entweder als Brauch- oder Reinwasser oder wird, falls kein Abwasser 11 zur Reaktionseinrichtung 12 geführt wird, in die Reaktionseinrichtung 12 zurückgeführt.

Das Verfahren arbeitet quasi kontinuierlich, selbst wenn in bestimmten Zeiträumen kein Abwasser 11 anfällt, das in die Reaktionseinrichtung 12 geführt werden kann. Die Rückführung des Permeats 150 in die Reaktionseinrichtung 12 erfolgt durch geeignete Steuerung des Verfahrens dann, wenn der Pegel des Abwassers 11 (ursprüngliches Abwasser 11 und Retentat 160) in der Reaktionseinrichtung 12 eine festlegbare untere Grenze erreicht hat, und das Permeat 150 wird nach außen abgeführt, wenn der Pegel des Abwassers 11 (ursprüngliches Abwasser 11, Retentat 160 und Permeat 150) im Reaktionsgefäß eine obere Grenze erreicht hat.

Der Betrieb der Pumpe 23 erfolgt kontinuierlich, d.h. das vorgereinigte bzw. voraufbereitete Abwasser wird zur Membrantrenneinrichtung 14 bzw. zu der in der Verbindungsleitung 21 vorgeschalteten Pumpe 24 gefördert. Es sei noch darauf hingewiesen, daß der biologische Abbau der Inhaltsstoffe des Abwassers 11 in der Reaktionseinrichtung 12 zu einem Wachstum der darin suspendierten Mikroorganismen führt (Anstieg des TS-Gehaltes im System) und zu einer Aufzehrung des Sauerstoffs im Abwasser 11 in der Reaktionseinrichtung 12. Beide Größen können durch geeignete Detektoren erfaßt werden und können neben regelungstechnischen Aufgaben zur Steuerung der Vorrichtung 10 auch als Indikatoren für die Funktion des erfindungsgemäßen Verfahrens dienen. Die schon erwähnte Pumpe 25 gewährleistet in Kombination mit der Funktion der Membrantrenneinrichtung 14 eine stabile Biomassenkonzentration in der Reaktionseinrichtung 12. Bei Überschreiten einer vorgegebenen Konzentration der Biomasse (Trockensubstanz = TS) in der Reaktionseinrichtung 12 kann beispielsweise zwischen 2 und 5 % vom Abwasserzulauf als überschußschlamm angepumpt werden. Bei Unterschreiten eines vorgegebenen TS-Gehaltes kann die Pumpe 25, gesteuert durch automatische Erfassung des TS-Gehaltes, abgeschaltet werden.

### Bezugszeichenliste

- 10: Vorrichtung
- 11: Abwasser
- 12: Reaktionseinrichtung/Reaktionssystem
- 13: Eingang (Membrantrenneinrichtung)
- 14: Membrantrenneinrichtung
- 15: Permeatausgang
- 150: Permeat
- 16: Retentatausgang
- 160: Retentat
- 17: Eingang (Reaktionseinrichtung)
- 18: Eingang (Reaktionseinrichtung)
- 19: Pumpe (Sauerstoffeintrag)
- 20: Sauerstoff/Luft
- 21: Verbindungsleitung
- 22: Wärmetauscher
- 23: Pumpe
- 24: Pumpe
- 25: Pumpe (Biomasse)
- 26: Biomasse
- 27: Dreiwegeventil
- 28: Durchlauferhitzer
- 29: Kühlmedium
- 30: Ausgang (vorgereinigtes/vorbehandeltes Abwasser)
- 31: Ausgang (Biomasse)
- 32: Druckluft

## Patentansprüche

1. Verfahren zur Reinigung und/oder Aufbereitung kommunaler und/oder industrieller Abwässer, insbesondere zum Einsatz in marinen Einrichtungen, bei dem das zu reinigende bzw. aufzubereitende Abwasser auf ein biologisches Reaktionssystem, in dem Biomasse. hoher Konzentration suspendiert ist, gegeben wird, wobei das behandelte Abwasser nach der Behandlung im Reaktionssystem auf eine Membrantrenneinrichtung gegeben wird, in der es in ein Permeat und ein Retentat getrennt wird, und wobei das Permeat entweder als Brauch- oder Reinwasser abgeführt oder wenigstens teilweise in das Reaktionssystem zurückgeführt wird und daß das nach dem Prinzip der Hochzelldichtefermentation betriebene Reaktionssystem entweder mit einer Biomassenkonzentration von 1 bis 2 g/l als Startkultur geladen wird, die auf die gewünschte hohe Konzentration von 30 g/l gesteigert wird, oder mit einer hohen Konzentration von Biomasse von 30 g/l geladen wird.

2. Verfahren nach Anspruch 1, **dadurch gekennzeichnet, daß** das Retentat wenigstens teilweise in das. Reaktionssystem zurückgeführt wird.

3. Verfahren nach einem oder beiden der Ansprüche 1 oder 2, **dadurch gekennzeichnet, daß** das zu reinigende bzw. aufzubereitende Abwasser vor Einführung in das Reaktionssystem vorfiltriert wird.

4. Verfahren nach einem oder mehreren der Ansprüche 1 bis 3, **dadurch gekennzeichnet, daß** in das Reaktionssystem Luft oder Sauerstoff eingetragen wird.

5. Verfahren nach einem oder mehreren der Ansprüche 1 bis 3, **dadurch gekennzeichnet, daß** das im Reaktionssystem behandelte Abwasser vor Eintritt in die Membrantrenneinrichtung temperiert wird.

6. Verfahren nach einem oder mehreren der Ansprüche 1 bis 5, **dadurch gekennzeichnet, daß** das im Reaktionssystem behandelte Abwasser vor Eintritt in die Membrantrenneinrichtung druckerhöht wird.

7. Verfahren nach einem oder mehreren der Ansprüche 4 bis 6, **dadurch gekennzeichnet, daß** dem Reaktionssystem Luft oder Sauerstoff mit einem Druck von 1 bis 1,2 bar zugeführt wird.

8. Verfahren nach einem oder mehreren der Ansprüche 1 bis 7, **dadurch gekennzeichnet, daß** die Rückführung des Permeats in das Reaktionssystem dann erfolgt, wenn der Pegel des Abwassers (ursprüngliches Abwasser und Retentat) im Reaktionssystem eine festlegbare untere Grenze erreicht hat und abgeführt wird, wenn der Pegel des Abwassers (ursprüngliches Abwasser, Retentat und Permeat) im Reaktionssystem eine obere Grenze erreicht hat.

9. Verfahren nach einem oder mehreren der Ansprüche 1 bis 8, **dadurch gekennzeichnet, daß** wenigstens ein Teil des Retentats unter Druckerhöhung auf die Membrantrenneinrichtung nach Art eines Kreislaufs zurückgeführt wird.

## Claims

1. Process for purifying and/or reclaiming municipal and/or industrial aqueous effluents, particularly for use in marine installations, in which the aqueous effluent to be purified or reclaimed is fed into a biological reaction system in which a high concentration of biomass is suspended, whereby, after the treatment in the reaction system, the treated aqueous effluent is fed into a membrane separation equipment in which it is separated into a permeate and a retentate, and whereby the permeate is withdrawn either as process water or pure water, or is at least partly recycled into the reaction system, and the reaction system operated according to the high cell density fermentation principle is charged with a biomass concentration of 1 to 2 g/l as a starter culture which is increased to the desired high concentration of 30 g/l, or is charged with a high biomass concentration of 30 g/l.

2. Process according to Claim 1, **characterized in that** the retentate is at least partly recycled into the reaction system.

3. Process according to one or both of the Claims 1 or 2, **characterized in that** the aqueous effluent to be purified or reclaimed is pre-filtered before it is introduced into the reaction system.

4. Process according to one or more of the Claims 1 to 3, **characterized in that** air or oxygen is fed into the reaction system.

5. Process according to one or more of the Claims 1 to 3, **characterized in that** the aqueous effluent treated in the reaction system is brought to a controlled temperature before entry into the membrane separation equipment.

6. Process according to one or more of the Claims 1 to 5, **characterized in that** the aqueous effluent treated in the reaction system is increased in pressure before entry into the membrane separation equipment.

7. Process according to one or more of the Claims 4 to 6, **characterized in that** air or oxygen is fed into the reaction system at a pressure of 1 to 1.2 bar.

8. Process according to one or more of the Claims 1 to 7, **characterized in that** the recycling of the permeate into the reaction system takes place when the level of the aqueous effluent (original aqueous effluent and retentate) in the reaction system has reached a definable lower limit and is withdrawn when the level of the aqueous effluent (original aqueous effluent, retentate and permeate) in the reaction system has reached an upper limit.

9. Process according to one or more of the Claims 1 to 8, **characterized in that** at least a part of the retentate, its pressure being increased, is recycled to the membrane separation equipment in the manner of a circulation.

## Revendications

1. Procédé pour la purification et / ou le traitement des eaux usées domestiques et / ou industrielles, en particulier en vue d'une utilisation dans des dispositifs de marine, pour lequel l'eau à purifier, respectivement à traiter, est donnée à un système de réaction biologique, dans lequel se trouve de la biomasse en suspension à une haute concentration, les eaux usées traitées étant données après le traitement dans le système de réaction sur un dispositif de séparation à membrane, dans lequel elles sont séparées en un perméat et une retenue, et le perméat étant soit évacué sous forme d'eau utilitaire ou d'eau pure, soit recyclé au moins en partie dans le système de réaction, et le système de réaction, conduit selon le principe de la fermentation en haute concentration de cellules, étant soit chargé avec une concentration de masse biologique de 1 à 2 g/l comme culture de départ, qui est augmentée à la haute concentration désirée de 30 g/l, soit chargé avec une haute concentration de masse biologique de 30 g/l.

2. Procédé selon la revendication 1, **caractérisé en ce que** la retenue est recyclée au moins en partie dans le système de réaction.

3. Procédé selon une des revendications 1 ou 2 ou selon les deux, **caractérisé en ce que** les eaux usées à purifier ou à traiter sont pré-filtrées avant leur introduction dans le système de réaction.

4. Procédé selon une ou plusieurs des revendications 1 à 3, **caractérisé en ce que** de l'air ou de l'oxygène est introduit dans le système de réaction.

5. Procédé selon une ou plusieurs des revendications 1 à 3, **caractérisé en ce que** les eaux usées traitées dans le système de réaction sont mises en température avant leur entrée dans le dispositif de séparation à membrane.

6. Procédé selon une ou plusieurs des revendications 1 à 5, **caractérisé en ce que** les eaux usées traitées dans le système de réaction sont soumises à une augmentation de pression avant leur entrée dans le dispositif de séparation à membrane.

7. Procédé selon une ou plusieurs des revendications 4 à 6, **caractérisé en ce que** de l'air ou de l'oxygène est introduit dans le système de réaction avec une pression de 1 à 1,2 bar.

8. Procédé selon une ou plusieurs des revendications 1 à 7, **caractérisé en ce que** le recyclage du perméat dans le système de réaction s'effectue quand le niveau des eaux usées (eaux usées d'origine et retenue) dans le système de réaction a atteint une limite inférieure déterminable, et **en ce que** le perméat est évacué quand le niveau des eaux usées (eaux usées d'origine, retenue et perméat) dans le système de réaction a atteint une limite supérieure.

9. Procédé selon une ou plusieurs des revendications 1 à 8, **caractérisé en ce qu'**au moins une partie de la retenue est recyclée sur le dispositif de séparation à membrane, avec augmentation de la pression, à la manière d'un circuit.
